# EUROPÄISCHE PATENTSCHRIFT

(11) **EP 1 832 155 B1**
(45) Veröffentlichungstag und Bekanntmachung des Hinweises auf die Patenterteilung: **03.12.2008**
(21) Anmeldenummer: 07003706.4
(22) Anmeldetag: 23.02.2007
(51) Int. Cl.: A01D 34/90, A45F 3/12, G10G 5/00, B27B 17/00

(54) **Traganordnung**
Carrier assembly
Agencement de support

(30) Priorität: 06.03.2006 DE 102006010557
(43) Veröffentlichungstag der Anmeldung: 12.09.2007
(73) Patentinhaber: Andreas Stihl AG & Co. KG, 71336 Waiblingen (DE)
(72) Erfinder: Machens, Kai-Ulrich, Dr., 70193 Stuttgart (DE); Menzel, Johannes, 73529 Rechberg (DE); Kotulla, Lothar, 70329 Stuttgart (DE); Winkler, Christoph, 70597 Stuttgart (DE)
(74) Vertreter: Wasmuth, Rolf

(56) Entgegenhaltungen:
- WO-A-03/056975
- DE-A1- 2 611 873
- FR-A- 935 744
- FR-A- 2 635 255
- FR-A- 2 849 996
- GB-A- 521 222
- US-A- 2 396 118
- US-A- 5 400 935
- US-A- 5 893 503

## Beschreibung

Die Erfindung betrifft eine Traganordnung der im Oberbegriff des Anspruchs 1 angegebenen Gattung.

Aus der DE 26 11 873 A1 ist ein Schüttelgerät mit einem Traggurt bekannt. Der Traggurt ist im Bereich der Schulter des Bedieners in einer Schulterauflage geführt. Der Gurt ist als Diagonalgurt ausgebildet, verläuft also über die dem Arbeitsgerät abgewandte Schulter des Bedieners und ist an seinen beiden Enden an dem Arbeitsgerät festgelegt.

Bei derartigen Traggurten sind der Gurt und die Schulterauflage üblicherweise so ausgebildet, dass zwar die Schulterauflage an dem Gurt längsverschieblich angeordnet ist, im Betrieb unter Last eine Bewegung des Gurts gegenüber der Schulterauflage jedoch nicht möglich ist. Dies führt dazu, dass bei einem Verschwenken des Arbeitsgeräts im Betrieb die Schulterauflage vom Bediener auf der Schulter versetzt werden muss und der Bediener durch die Schulterauflage behindert werden kann.

Aus der FR 2 635 255 geht eine Traganordnung für Taschen oder dgl. hervor, deren Schulterauflage eine Gleitfläche aufweist.

Bei derartigen Diagonalgurten wirken sowohl in senkrechter als auch in horizontaler Richtung Kräfte. Die horizontalen Kräfte bewirken, dass der Gurt im Bereich der Schulter des Bedieners zum Hals des Bedieners gedrückt wird.

Die US 5,893,503 offenbart eine Traganordnung für eine Tasche mit einem Schultergurt, an dem ein Seitengurt und ein Hüftgurt festgelegt sind, die ein Herabrutschen des Gurts von der Schulter des Benutzers vermeiden sollen.

Der Erfindung liegt die Aufgabe zugrunde, eine Traganordnung der gattungsgemäßen Art zu schaffen, die Behinderungen des Bedieners im Betrieb vermeidet.

Diese Aufgabe wird durch eine Traganordnung mit den Merkmalen des Anspruchs 1 gelöst.

Um ein Versetzen der Schulterauflage auf der Schulter des Bedieners im Betrieb zu vermeiden, ist vorgesehen, dass die Traganordnung Mittel zur Verringerung der Reibung zwischen dem Tragelement und der Schulterauflage besitzt. Durch die Verringerung der Reibung kann das Tragelement auch im Betrieb und unter Last in Längsrichtung der Schulterauflage verrutschen. Ein Verschwenken des Arbeitsgeräts bewirkt damit lediglich eine Veränderung der Position des Tragelements gegenüber der Schulterauflage. Die Schulterauflage kann in unveränderter Position auf der Schulter des Bedieners angeordnet bleiben. Dadurch ist ein ungestörtes Arbeiten ermöglicht.

Vorteilhaft ist zur Verringerung der Reibung eine Gleitbahn an der Schulterauflage ausgebildet. Die Gleitbahn ist insbesondere an einer biegsamen Gleitplatte ausgebildet, auf der das Tragelement im Betrieb aufliegt. Dadurch, dass die Gleitplatte biegsam ausgebildet ist, passt sich die Gleitplatte gut an die Körperform des Bedieners an. Dadurch ist eine ergonomisch gestaltete Traganordnung ermöglicht. Vorteilhaft ist die Gleitplatte aus Kunststoff. Eine Gleitplatte aus Kunststoff kann auf einfache Weise hergestellt und mit der Schulterauflage beispielsweise durch Nähen verbunden werden. Kunststoff besitzt gegenüber den üblichen Materialen von Tragelementen wie Gurten, Seilen oder dgl. einen geringen Reibkoeffizienten, so dass das Tragelement mit geringem Kraftaufwand bei am Tragelement angeordnetem Arbeitsgerät in der Schulterauflage bewegt werden kann.

Um die im Betrieb auftretenden seitlichen Kräfte gut und ergonomisch aufnehmen zu können, ist vorgesehen, dass die Schulterauflage einen Schulterabschnitt und einen mit dem Schulterabschnitt verbundenen seitlichen Stützabschnitt besitzt, wobei auf dem Schulterabschnitt das Tragelement angeordnet ist und der seitliche Stützabschnitt zur Anlage an einer Flanke des Bedieners ausgebildet ist. Der Schulterabschnitt nimmt damit die senkrecht auf den Bediener wirkenden Kräfte auf, während der Stützabschnitt die horizontalen Kräfte an der Flanke des Bedieners abfängt. Dadurch ist vermieden, dass sich das Tragelement in Richtung auf den Hals des Bedieners bewegt und den Bediener so behindert. Dadurch, dass der seitliche Stützabschnitt mit dem Schulterabschnitt direkt verbunden ist, ergibt sich eine einfache Ausgestaltung. Durch Austausch der Schulterauflage können auch bestehende Traganordnungen mit einem Stützabschnitt versehen werden. Vorteilhaft besteht der seitliche Stützabschnitt mindestens teilweise aus einem Netzmaterial. Netzmaterial ist sehr dehnbar, so dass eine Anpassung an die Größe des Bedieners erfolgt. Ferner ist das Netzmaterial dünn und luftdurchlässig, so dass sich ein hoher Tragekomfort ergibt.

Vorteilhaft sind der seitliche Stützabschnitt und der Schulterabschnitt in einem an der Vorderseite des Bedieners anzuordnenden Bereich des Schulterabschnitts und in einem an der Rückseite des Bedieners anzuordnenden Bereich des Schulterabschnitts miteinander verbunden und bilden eine Armöffnung für den Arm des Bedieners. Dadurch kann die Schulterauflage nach Art einer halben Weste vom Bediener angezogen werden, indem der Bediener seinen Arm durch die Armöffnung führt. Die Schulterauflage ist dadurch sowohl in horizontaler als auch in vertikaler Richtung am Bediener gesichert, so dass ein Verrutschen vermieden ist. Eine Fixierung durch zusätzliche Gurte, beispielsweise durch einen Hüftgurt oder dgl., kann dadurch entfallen. Vorteilhaft ist der untere Rand des seitlichen Stützabschnitts gegenüber einem unteren Rand des Schulterabschnitts in Richtung auf ein freies Ende des Tragelements versetzt. Dadurch lässt sich eine große Armöffnung bei vergleichsweise geringer Länge des Schulterabschnitts realisieren. Bei Traganordnungen mit einer Verstelleinrichtung zur Anpassung der Länge des Tragelements kann durch den Versatz zwischen den unteren Rändern von Schulterabschnitt und Stützabschnitt der maximale Verstellweg vergrößert werden.

Zweckmäßig besitzt die Schulterauflage mindestens eine Schlaufe, durch die das Tragelement hindurchgeführt ist. Es kann jedoch auch vorgesehen sein, dass die Schulterauflage eine Durchführung besitzt, durch die das Tragelement hindurchgeführt ist. Die Durchführung ist insbesondere als Rohr ausgebildet. Zweckmäßig besitzt das Tragelement an seinen freien Enden jeweils ein Befestigungsmittel zur Fixierung an dem Arbeitsgerät. Um ein einfaches Anlegen des Tragelements zu ermöglichen, ist vorgesehen, dass das Tragelement einen ersten Abschnitt besitzt, an dem die Schulterauflage festgelegt ist, und einen zweiten Abschnitt, wobei der erste und der zweite Abschnitt des Tragelements über eine lösbare Schnalle miteinander verbunden sind. Der Bediener kann die beiden Abschnitte an dem Arbeitsgerät festlegen, während das Arbeitsgerät noch auf dem Boden liegt. Um das Tragelement anzulegen, geht der Bediener in die Hocke und legt sich den ersten Abschnitt des Tragelements über die Schulter. Durch Verschließen der Schnalle, die zweckmäßig an der Vorderseite des Bedieners angeordnet ist, werden die beiden Abschnitte miteinander verbunden und die Traganordnung ist angelegt. Die Traganordnung besitzt vorteilhaft eine Verstelleinrichtung zur Anpassung der Länge des Tragelements. Dadurch ist eine einfache Anpassung auf die Körpergröße des Bedieners möglich. Vorteilhaft ist die Schulterauflage als Schulterpolster ausgebildet. Dadurch können die im Arbeitsgerät entstehenden Kräfte gut in die Schulter des Bedieners eingeleitet werden.

Ausführungsbeispiele der Erfindung werden im Folgenden anhand der Zeichnung erläutert. Es zeigen:
- Fig. 1: ein Arbeitsgerät, das über eine Traganordnung von einem Bediener getragen wird,
- Fig. 2: eine schematische Darstellung einer Traganordnung,
- Fig. 3: einen Schnitt entlang der Linie III-III in Fig. 2 in schematischer Darstellung,
- Fig. 4 und Fig. 5: schematische Darstellungen von Traganordnungen gemäß der Erfindung
- Fig. 6: eine schematische, ausschnittsweise Seitenansicht der Traganordnung aus Fig. 5,
- Fig. 7: eine perspektivische Darstellung des Schulterpolsters der Traganordnung aus Fig. 5,
- Fig. 8: eine schematische Darstellung einer Traganordnung gemäß der Erfindung
- Fig. 9: einen Schnitt durch eine Schulterauflage in schematischer Darstellung.

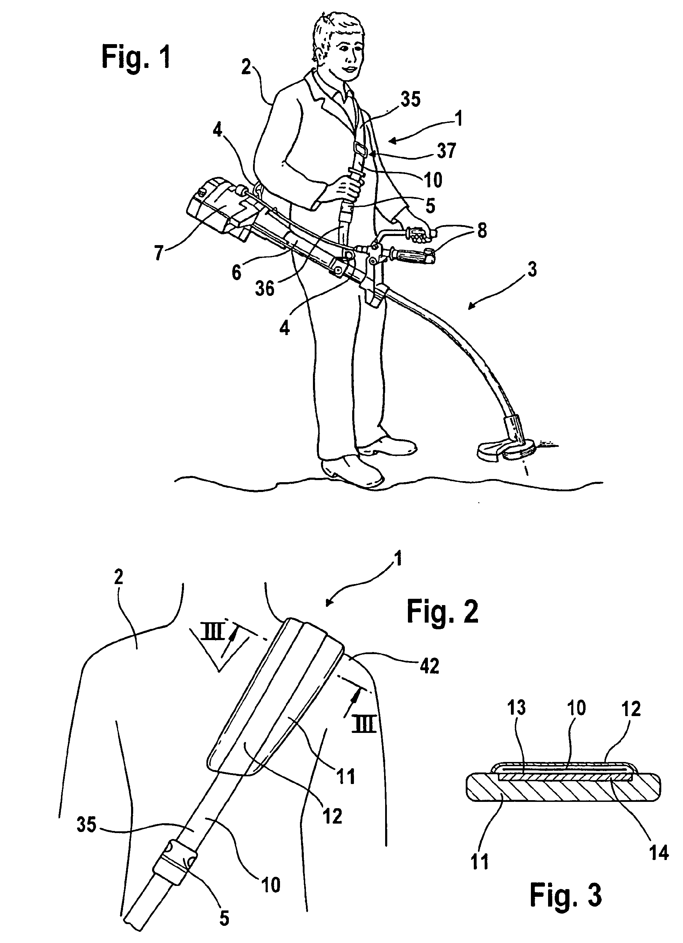

Die in Fig. 1 gezeigte Traganordnung 1 dient zum Tragen eines handgeführten, motorgetriebenen Arbeitsgeräts 3 wie beispielsweise einem Freischneider, einem Olivenernter oder dgl.. Die Traganordnung 1 besitzt einen Gurt 10, der an seinen Enden jeweils einen Haken 4 besitzt, mit dem der Gurt 10 an dem Arbeitsgerät 3 festgelegt ist. Anstatt des Gurts 10 kann auch ein anderes Tragelement wie beispielsweise eine Kette, ein Seil oder dgl. vorgesehen sein. Der Gurt 10 ist als Diagonalgurt ausgebildet und über die dem Arbeitsgerät 3 abgewandte Schulter eines Bedieners 2 geführt. Das Arbeitsgerät 3 besitzt ein Gehäuse 7, aus dem eine Führungsstange 6 ragt. In dem Gehäuse 7 ist ein Antriebsmotor, insbesondere ein Verbrennungsmotor, angeordnet, der eine in der Führungsstange 6 angetriebene Antriebswelle antreibt. Die Antriebswelle kann je nach Arbeitsgerät rotierend oder in Längsrichtung hin- und hergehend angetrieben sein. Ein Haken 4 ist am Gehäuse 7 angeordnet. An der Führungsstange 6 sind zwei Handgriffe 8 festgelegt. Der zweite Haken 4 ist in einem Bereich zwischen den beiden Handgriffen 8 und dem Gehäuse 7 an der Führungsstange 6 angeordnet.

Der Gurt 10 besitzt einen ersten Abschnitt 35, der sich von dem am Gehäuse 7 angeordneten Haken 4 diagonal über den Rücken des Bedieners 2 und über die dem Arbeitsgerät 3 abgewandte Schulter des Bedieners 2 erstreckt. Ein zweiter Abschnitt 36 erstreckt sich ausgehend von dem benachbart zu den beiden Handgriffen 8 angeordneten Haken 4 in Richtung auf den ersten Abschnitt 35. Die beiden Abschnitte 35 und 36 sind über eine lösbare Schnalle 5 miteinander verbunden. An der Schnalle 5 ist eine Verstelleinrichtung 37 ausgebildet, mit der die Länge des ersten Abschnitts 35 des Gurts 10 angepasst werden kann.

In Fig. 2 ist die Traganordnung 1 ausschnittsweise gezeigt. An dem ersten Abschnitt 35 des Gurts 10 ist im Bereich einer Schulter 42 des Bedieners 2 ein Schulterpolster 11 angeordnet. Das Schulterpolster 11 besitzt eine tunnelartige Durchführung 12, durch die der Gurt 10 geführt ist. Das Schulterpolster 11 erstreckt sich auf der Vorderseite des Bedieners 2 etwa bis auf Brusthöhe und am Rücken des Bedieners 2 etwa bis auf die Höhe des Schulterblatts und stützt den Gurt 10 gegenüber der Schulter 42 des Bedieners 2 ab.

Fig. 3 zeigt einen Schnitt durch das Schulterpolster 11. An dem Schulterpolster 11 ist eine Gleitplatte 14 fixiert, beispielsweise angenäht. Die Gleitplatte 14 bildet eine Gleitbahn 13 für den Gurt 10. Die Gleitplatte 14 erstreckt sich über die gesamte Länge des Schulterpolsters 11, so dass der Gurt 10 mit seiner gesamten im Schulterpolster 11 geführten Länge auf der Gleitplatte 14 aufliegt. Die Gleitplatte 14 besteht aus einem biegsamen Kunststoffmaterial, das einen geringen Reibungskoeffizienten zum Material des Gurts 10 besitzt. Dadurch kann der Gurt 10 auch bei an der Traganordnung 1 angeordnetem Arbeitsgerät 3 in der Durchführung 12 verschoben werden.

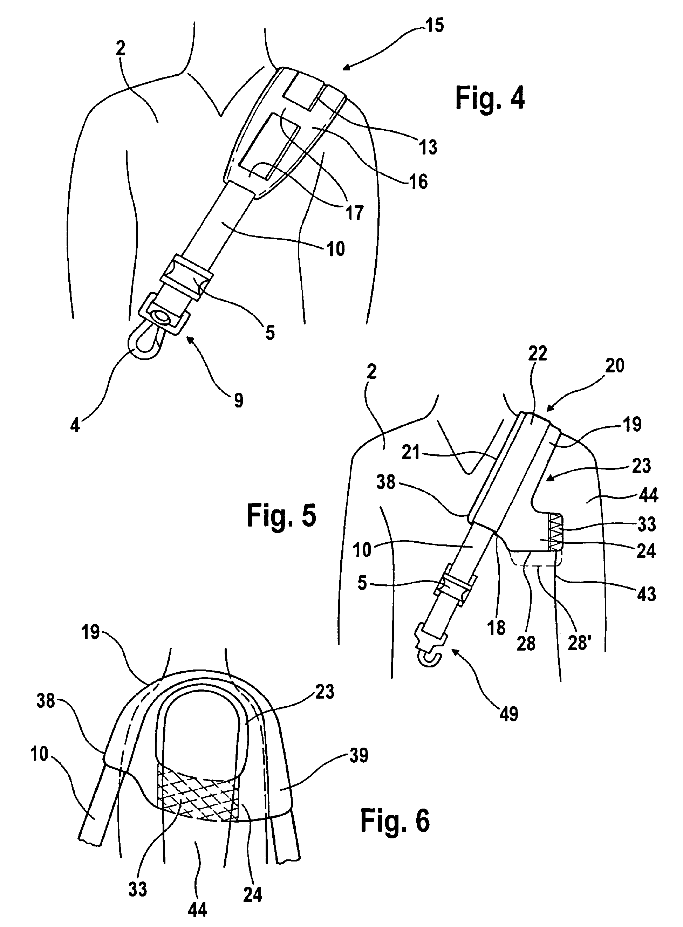

Ein Ausführungsbeispiel einer Traganordnung 15 ist in Fig. 4 gezeigt. Die Traganordnung 15 entspricht im Wesentlichen der Traganordnung 1. Als Schulterauflage besitzt die Traganordnung 15 ein Schulterpolster 16, das mehrere Schlaufen 17 besitzt. Der Gurt 10 ist durch die Schlaufen 17 hindurchgeführt. In dem Bereich, in dem der Gurt 10 auf dem Schulterpolster 16 aufliegt, besitzt das Schulterpolster 16 eine Gleitbahn 13. An den freien Enden 9 des Gurts 10, der das Tragelement bildet, sind Haken 4 zur Fixierung an einem Arbeitsgerät angeordnet.

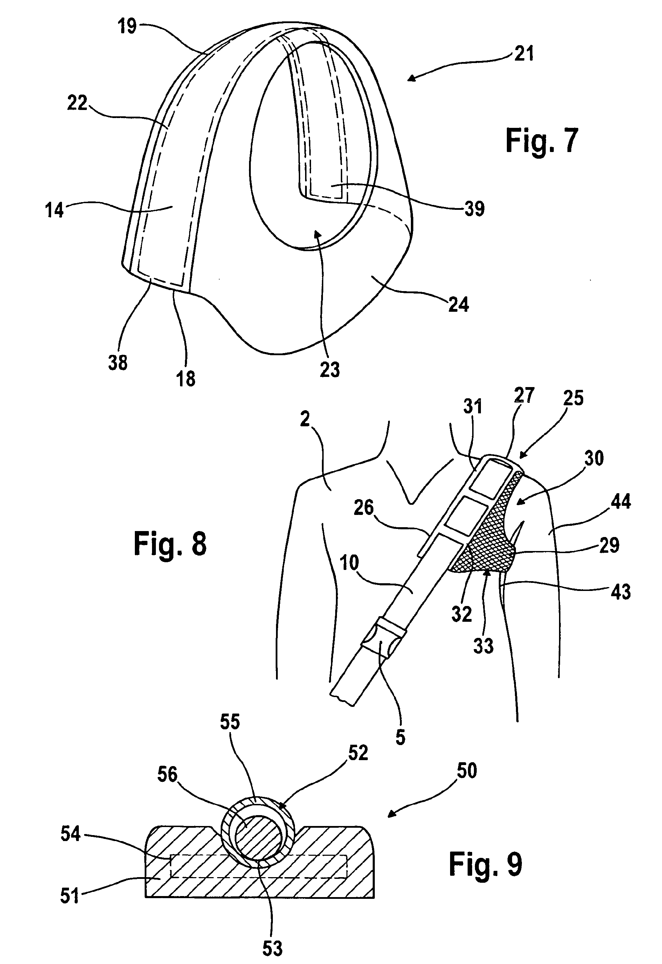

Ein Ausführungsbeispiel für eine Traganordnung gemäß der Erfindung 20 ist in den Fig. 5 bis 7 gezeigt. Die Traganordnung 20 besitzt ein Schulterpolster 21, in dem der Gurt 10 in einer Durchführung 22 angeordnet ist. Auch die Durchführung 22 besitzt eine in Fig. 7 gezeigte Gleitplatte 14. Der Gurt 10 kann damit in der Durchführung 22 auch bei Belastung des Gurts 10 verschoben werden.

Das Schulterpolster 21 besitzt einen Schulterabschnitt 19, der im Wesentlichen dem Schulterpolster 11 der Traganordnung 1 entspricht. Der Schulterabschnitt 19 besitzt einen vorderen Bereich 38, der im Betrieb an der Vorderseite des Bedieners 2 angeordnet ist, sowie einen hinteren Bereich 39 (Fig. 6 und 7), der im Betrieb am Rücken des Bedieners 2 angeordnet ist. Auf der Höhe eines unteren Rands 18 des Schulterabschnitts 19 erstreckt sich zwischen dem vorderen Bereich 38 und dem hinteren Bereich 39 ein seitlicher Stützabschnitt 24. Der seitliche Stützabschnitt 24 ist am vorderen Bereich 38 und am hinteren Bereich 39 festgelegt. Der Schulterabschnitt 19 und der seitliche Stützabschnitt 24 bilden eine Armöffnung 23, durch die ein Arm 44 des Bedieners 2 ragt. Der seitliche Stützabschnitt 24 besitzt einen unteren Rand 28, der gegenüber dem unteren Rand 18 zu den freien Enden 49 des Gurts 10 hin versetzt ist. Dadurch, dass der untere Rand 18 näher bei der Schulter 42 des Bedieners 2 angeordnet ist, ist die zur Längenanpassung zur Verfügung stehende Gurtlänge vergrößert. Die freie, nicht in der Durchführung 22 angeordnete Gurtlänge ist vergrößert. Wie durch den gestrichelt gezeigten Rand 28' angedeutet ist, kann der Versatz vergleichsweise groß sein. Der Stützabschnitt 24 kann jedoch auch auf der Höhe des unteren Rands 18 angeordnet sein. Der seitliche Stützabschnitt 24 liegt im Betrieb an einer Flanke 43 des Bedieners 2 an, die dem Arbeitsgerät 3 abgewandt liegt. Der seitliche Stützabschnitt 24 nimmt in vertikaler Richtung wirkende Kräfte auf und leitet diese in den Bediener 2 ein. Dadurch wirken am Schulterabschnitt 19 keine Kräfte in vertikaler Richtung. Wie in Fig. 7 gezeigt ist, können der Schulterabschnitt 19 und der seitliche Stützabschnitt 24 aus dem gleichen Material bestehen. Es kann jedoch auch vorgesehen sein, dass der Stützabschnitt 24 aus einem anderen Material besteht. Vorteilhaft besteht der Stützabschnitt 24 zumindest in dem unter dem Arm 44 des Bedieners 2 angeordneten Bereich aus einem Netzmaterial 33. Dies ist in Fig. 5 und Fig. 6 gezeigt.

In Fig. 8 ist ein weiteres Ausführungsbeispiel einer Traganordnung 25 gemäß der Erfindung gezeigt. Der Gurt 10 der Traganordnung 25 ist in einem Schulterpolster 26 auf der Schulter 42 des Bedieners 2 geführt. Das Schulterpolster 26 besitzt Schlaufen 27, durch die der Gurt 10 hindurchgeführt ist. Am Schulterpolster 26 ist eine nicht dargestellte Gleitbahn für den Gurt 10 ausgebildet, auf der der Gurt 10 aufliegt. Das Schulterpolster 26 besitzt einen Schulterabschnitt 31, der sich über die Schulter 42 des Bedieners 2 erstreckt. Der Schulterabschnitt 31 besitzt einen Seitenrand 32, der dem Arbeitsgerät 3 abgewandt liegt. An dem Seitenrand 32 ist ein seitlicher Stützabschnitt 29 festgelegt. Der seitliche Stützabschnitt 29 ist dabei über die gesamte Länge des Schulterabschnitts 31 an dem Schulterabschnitt 31 fixiert. Der seitliche Stützabschnitt 29 bildet eine Armöffnung 30 für den Arm 44 des Bedieners 2. Der seitliche Stützabschnitt stützt sich an der Flanke 43 des Bedieners 2 ab und nimmt Querkräfte auf. Wie in Fig. 8 gezeigt ist, besteht der seitliche Stützabschnitt aus einem anderen Material als der Schulterabschnitt 31, nämlich aus einem luftdurchlässigen Netzmaterial 33.

Ein Schnitt durch ein weiteres Ausführungsbeispiel einer Traganordnung 50 ist in Fig. 9 gezeigt. Die Traganordnung 50 entspricht im Wesentlichen der Traganordnung 1. Die Traganordnung 50 besitzt als Tragelement ein Seil 56, das nicht gezeigte Mittel zur Längenverstellung und zur Verbindung mit dem Arbeitsgerät besitzt. Die Traganordnung 50 besitzt ein Schulterpolster 51, auf dem ein Rohr 55 angeordnet ist. Das Rohr 55 bildet eine Durchführung 52 für das Seil 56. Zur besseren Verteilung der eingeleiteten Kräfte kann das Schulterpolster 51 eine in Fig. 9 gestrichelt gezeichnete Lagerplatte 54 besitzen, auf der das Rohr 55 angeordnet ist. Das Rohr 53, 55 bildet eine Gleitfläche, die die Reibung zwischen dem Seil 56 und dem Schulterpolster 51 verringert. Es kann vorgesehen sein, dass das Schulterpolster 51 einen seitlichen Stützabschnitt besitzt.

Anstatt des Seils 56 und des Gurts 10 können auch andere Tragelemente wie beispielsweise eine Kette oder dgl. zum Einsatz kommen.

## Patentansprüche

1. Traganordnung für ein handgeführtes Arbeitsgerät mit einem über die Schulter (42) eines Bedieners (2) zu führenden Tragelement und mit einer Schulterauflage,
wobei die Schulterauflage einen Schulterabschnitt (19, 31) und einen mit dem Schulterabschnitt (19, 31) verbundenen seitlichen Stützabschnitt (24, 29) besitzt,
wobei auf dem Schulterabschnitt (19, 31) das Tragelement angeordnet ist und wobei der seitliche Stützabschnitt (24, 29) zur Anlage an einer Flanke (43) des Bedieners (2) ausgebildet ist, wobei der seitliche Stützabschnitt (24, 29) und der Schulterabschnitt (19, 31) miteinander verbunden sind,
**dadurch gekennzeichnet, dass** die Schulterauflage längsverschieblich au dem Tragelement angeordnet ist und dass der seitliche Stützabschnitt (24, 29) und der Schulterabschnitt (19, 31) in einem an der Vorderseite des Bedieners (2) anzuordnenden Bereich (38) des Schulterabschnitts (19, 31) und in einem an der Rückseite des Bedieners (2) anzuordnenden Bereich (39) des Schulterabschnitts (19, 31) miteinander verbunden sind und dass der seitliche Stützabschnitt (24, 29) und der Schulterabschnitt (19, 31) eine Arm-öffnung (23, 30) für den Arm des Bedieners (2) bilden.

2. Traganordnung nach Anspruch 1,
**dadurch gekennzeichnet, dass** die Traganordnung (1, 15, 20, 25, 50) Mittel zur Verringerung der Reibung zwischen dem Tragelement und der Schulterauflage besitzt.

3. Traganordnung nach Anspruch 2,
**dadurch gekennzeichnet, dass** zur Verringerung der Reibung eine Gleitbahn (13, 53) an der Schulterauflage ausgebildet ist.

4. Traganordnung nach Anspruch 3,
**dadurch gekennzeichnet, dass** die Gleitbahn (13) an einer biegsamen Gleitplatte (14) ausgebildet ist, auf der das Tragelement im Betrieb aufliegt, wobei die Gleitplatte (14) insbesondere aus Kunststoff ist.

5. Traganordnung nach Anspruch 1,
**dadurch gekennzeichnet, dass** der seitliche Stützabschnitt (24, 29) mindestens teilweise aus einem Netzmaterial (33) besteht.

6. Traganordnung nach einem der Ansprüche 1 bis 5,
**dadurch gekennzeichnet, dass** der untere Rand (28, 28') des seitlichen Stützabschnitts (24) gegenüber einem unteren Rand (18) des Schulterabschnitts (19) in Richtung auf ein freies Ende (49) des Tragelements versetzt ist.

7. Traganordnung nach einem der Ansprüche 1 bis 6,
**dadurch gekennzeichnet, dass** die Schulterauflage mindestens eine Schlaufe (17, 27) besitzt, durch die das Tragelement hindurchgeführt ist.

8. Traganordnung nach einem der Ansprüche 1 bis 6,
**dadurch gekennzeichnet, dass** die Schulterauflage eine Durchführung (12, 22, 52) besitzt, durch die das Tragelement hindurchgeführt ist, wobei die Durchführung (52) insbesondere als Rohr (55) ausgebildet ist.

9. Traganordnung nach einem der Ansprüche 1 bis 8,
**dadurch gekennzeichnet, dass** das Tragelement an seinen freien Enden (9, 49) jeweils ein Befestigungsmittel zur Fixierung an dem Arbeitsgerät (3) besitzt.

10. Traganordnung nach einem der Ansprüche 1 bis 9,
**dadurch gekennzeichnet, dass** das Tragelement einen ersten Abschnitt (35) besitzt, an dem die Schulterauflage festgelegt ist und einen zweiten Abschnitt (36),
wobei der erste Anschnitt (35) und der zweite Abschnitt (36) des Tragelements über eine lösbare Schnalle (5) miteinander verbunden sind.

11. Traganordnung nach einem der Ansprüche 1 bis 10,
**dadurch gekennzeichnet, dass** die Traganordnung (1, 15, 20, 25) eine Verstelleinrichtung (37) zur Anpassung der Länge des Tragelements besitzt.

12. Traganordnung nach einem der Ansprüche 1 bis 11,
**dadurch gekennzeichnet, dass** die Schulterauflage als Schulterpolster (11, 16, 21, 26, 51) ausgebildet ist.

## Claims

1. Carrier assembly for a manually guided work implement, with a supporting element that passes over the shoulder (42) of a user (2) and with a shoulder rest, such that the shoulder rest has a shoulder section (19, 31) and a lateral support section (24, 29) connected to the shoulder section (19, 31), the supporting element being arranged on the shoulder section (19, 31) and the lateral support section (24, 29) being formed such as to rest against a side (43) of the user (2), the lateral support section (24, 29) and the shoulder section (19, 31) being connected to one another,
**characterised in that** the shoulder rest is designed to move longitudinally along the supporting element, the lateral support section (24, 29) and the shoulder section (19, 31) are connected to one another in an area (38) of the shoulder section (19, 31) positioned at the front of the user (2) and in an area (39) of the shoulder section (19, 31) positioned at the back of the user (2), and the lateral support section (24, 29) and the shoulder section (19, 31) form an arm opening (23, 30) for the arm of the user (2).

2. Carrier assembly according to Claim 1,
**characterised in that** the carrier assembly (1, 15, 20, 25, 50) has means for reducing the friction between the supporting element and the shoulder rest.

3. Carrier assembly according to Claim 2,
**characterised in that** to reduce the friction a slide surface (13, 53) is formed on the shoulder rest.

4. Carrier assembly according to Claim 3,
**characterised in that** the slide surface (13) is formed on a flexible slide-plate (14) on which the supporting element rests during operation, the said slide-plate (14) being made in particular of plastic.

5. Carrier assembly according to Claim 1,
**characterised in that** the lateral support section (24, 29) consists at least in part of a mesh material (33).

6. Carrier assembly according to any of Claims 1 to 5,
**characterised in that** the lower edge (28, 28') of the lateral support section (24) is offset relative to a lower edge (18) of the shoulder section (19) in the direction toward a free end (49) of the supporting element.

7. Carrier assembly according to any of Claims 1 to 6,
**characterised in that** the shoulder rest has at least one loop slot (17, 27) through which the supporting element passes.

8. Carrier assembly according to any of Claims 1 to 6,
**characterised in that** the shoulder rest has an opening (12, 22, 52) through which the supporting element passes, the said opening being formed in particular as a tube (55).

9. Carrier assembly according to any of Claims 1 to 8,
**characterised in that** at each of its free ends (9, 49) the supporting element has fastening means for fixing onto the work implement (3).

10. Carrier assembly according to any of Claims 1 to 9,
**characterised in that** the supporting element has a first section (35) on which the shoulder rest is fixed, and a second section (36), such that the first section (35) and the second section (36) are connected to one another by means of a releasable buckle (5).

11. Carrier assembly according to any of Claims 1 to 10,
**characterised in that** the carrier assembly (1, 15, 20, 25) has an adjustment device (37) for adapting the length of the supporting element.

12. Carrier assembly according to any of Claims 1 to 11,
**characterised in that** the shoulder rest is made as a shoulder pad (11, 16, 21, 26, 51).

## Revendications

1. Dispositif pour porter un appareil tenu à la main, avec un élément porteur à passer sur l'épaule (42) d'un utilisateur (2), et un élément d'appui sur l'épaule, cet élément d'appui comprenant une partie pour l'épaule (19, 31) et une partie d'appui latérale (24, 29) reliée à celle-ci ; l'élément porteur étant disposé sur la partie pour l'épaule (19, 31) tandis que la partie d'appui latérale (24, 29) est conçue pour être appliquée contre un flanc (43) de l'utilisateur (2) ; et la partie d'appui latérale (24, 29) et la partie pour l'épaule (19, 31) étant reliées entre elles,
**caractérisé en ce que** l'élément d'appui sur l'épaule est disposé sur l'élément porteur en étant mobile longitudinalement, **en ce que** la partie d'appui latérale (24, 29) et la partie pour l'épaule (19, 31) sont reliées entre elles dans une zone (38) de ladite partie pour l'épaule (19, 31) à disposer sur le côté avant de l'utilisateur (2), et dans une zone (39) de ladite partie pour l'épaule (19, 31) à disposer sur le côté arrière de l'utilisateur (2), et **en ce que** la partie d'appui latérale (24, 29) et la partie pour l'épaule (19, 31) forment une ouverture (23, 30) pour le bras de l'utilisateur (2).

2. Dispositif (1, 15, 20, 25, 50) selon la revendication 1, **caractérisé en ce qu'**il comprend des moyens pour réduire le frottement entre l'élément porteur et l'élément d'appui sur l'épaule.

3. Dispositif selon la revendication 2, **caractérisé en ce que** pour réduire le frottement, une glissière (13, 53) est formée sur l'élément d'appui sur l'épaule.

4. Dispositif selon la revendication 3, **caractérisé en ce que** la glissière (13) est formée sur une plaque de glissement flexible (14) sur laquelle est posé l'élément porteur lors d'une utilisation, la plaque de coulissement (14) étant notamment en matière plastique.

5. Dispositif selon la revendication 1, **caractérisé en ce que** la partie d'appui latérale (24, 29) se compose au moins en partie d'un matériau en forme de filet (33).

6. Dispositif selon l'une des revendications 1 à 5, **caractérisé en ce que** le bord inférieur (28, 28') de la partie d'appui latérale (24) est décalé par rapport à un bord inférieur (18) de la partie pour l'épaule (19) en direction d'une extrémité libre (49) de l'élément porteur.

7. Dispositif selon l'une des revendications 1 à 6, **caractérisé en ce que** la partie d'appui sur l'épaule comprend au moins une boucle (17, 27) dans laquelle passe l'élément porteur.

8. Dispositif selon l'une des revendications 1 à 6, **caractérisé en ce que** la partie d'appui sur l'épaule comprend un passage (12, 22, 52) dans lequel passe l'élément porteur, le passage (52) étant conçu notamment comme un tube (55).

9. Dispositif selon l'une des revendications 1 à 8, **caractérisé en ce que** l'élément porteur comporte à chacune de ses extrémités libres (9, 49) un moyen de fixation pour être fixé à l'appareil (3).

10. Dispositif selon l'une des revendications 1 à 9, **caractérisé en ce que** l'élément porteur comprend une première partie (35) à laquelle est fixée la partie d'appui sur l'épaule, et une seconde partie (36), la première partie (35) et la seconde partie (36) de l'élément porteur étant reliées par une attache amovible (5).

11. Dispositif (1, 15, 20, 25) selon l'une des revendications 1 à 10, **caractérisé en ce qu'**il comporte un dispositif de réglage (37) pour adapter la longueur de l'élément porteur.

12. Dispositif selon l'une des revendications 1 à 11, **caractérisé en ce que** la partie d'appui sur l'épaule est conçue comme un rembourrage pour l'épaule (11, 16, 21, 26, 51).
